# EUROPEAN PATENT APPLICATION

(11) **EP 1 666 297 A1**
(43) Date of publication of application: **07.06.2006**
(21) Application number: 06004686.9
(22) Date of filing: 17.09.2004
(51) Int. Cl.: B60K 17/22, F16C 3/02, F16H 57/04, B60K 17/04, F16H 57/02, B60K 17/346

(54) **Vehicle drive system**

(30) Priority: 18.09.2003 JP 2003326474; 11.11.2003 JP 2003381552; 16.01.2004 JP 2004008835; 22.03.2004 JP 2004082953
(62) Divisional of application: 04255684.5
(71) Applicant: NISSAN MOTOR COMPANY, LIMITED, Yokohama-shi, Kanagawa 221-0023 (JP)
(72) Inventor: Mizuno, Kazutoshi, Aikou-gun Kanagawa-ken (JP); Takahashi, Kouji, Sagamihara-shi Kanagawa-ken (JP); Nomura, Hiroyuki, Nagoya-shi Aichi-ken (JP); Yamataka, Tatsuro, Zama-shi Kanagawa-ken (JP); Nakatsukasa, Haruaki, Ebina-shi Kanagawa-ken (JP); Akamine, Seiji, Sagamihara-shi Kanagawa-ken (JP)
(74) Representative: Godwin, Edgar James

(57) **Abstract**

A vehicle drive system includes: a front drive unit (U1) in a front part of a vehicle, which has an engine (1) and a torque converter (2) integrally assembled to one another; a rear drive unit (U2) in a rear part of the vehicle, which has a transmission (3) and a differential (4) integrally assembled to one another; and a drive shaft (5) connecting the torque converter (2) of the front drive unit (U1) and the transmission (3) of the rear drive unit (U2). The drive shaft (5) is configured to be elastically twistable for damping vibration transmission between the front and rear drive units (U1, U2). The drive shaft (5) may be made of fiber-reinforced plastics material. The transmission (3) is assembled to the front end of the differential (4). The rear drive unit (U2) is supported, at a rear end of the differential (4), by a rear end portion of a rear sub frame (16) which is joined to the vehicle floor, and at a front portion of the transmission (3), by a tunnel portion of a rear seat cross member (15), contiguous with a floor tunnel (13A), through a mount member (18).

## Description

The present invention relates to a vehicle drive system including an engine and a power train, particularly to a vehicle drive system for an automatic transmission (A/T) vehicle.

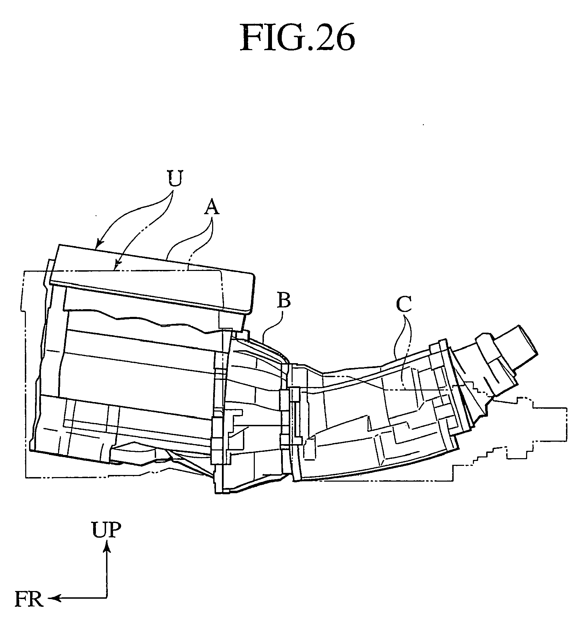

Generally, a drive unit U of an A/T vehicle of a front engine and rear drive type is structured with an engine A, a torque converter B and a transmission C, which are arranged from a front side in this order and integrally assembled as shown in FIG. 26. The drive unit U is installed in a front compartment of a vehicle body separately defined in front of a vehicle compartment thereof. Meanwhile, a differential is mounted on the vehicle body in a space beneath a rear floor. An output shaft of the transmission is connected to an input shaft of the differential through a steel propeller shaft for transmitting power of the engine.

Since the engine A and the transmission C are integrally assembled to one another with the torque converter B sandwiched therebetween, vibrations generated by the engine A and the transmission C, interfere with one another. Moreover, since a power shaft is split into a pump impeller shaft and a turbine runner shaft in the torque converter B, the entire drive unit U deflects in a way that the torque converter B is lowered from other components as exaggeratedly shown in FIG. 26. Additionally, since the torque converter B and the transmission C are combined, the vibration during a lockup engagement causes the entire drive unit U to vibrate at an increased rate.

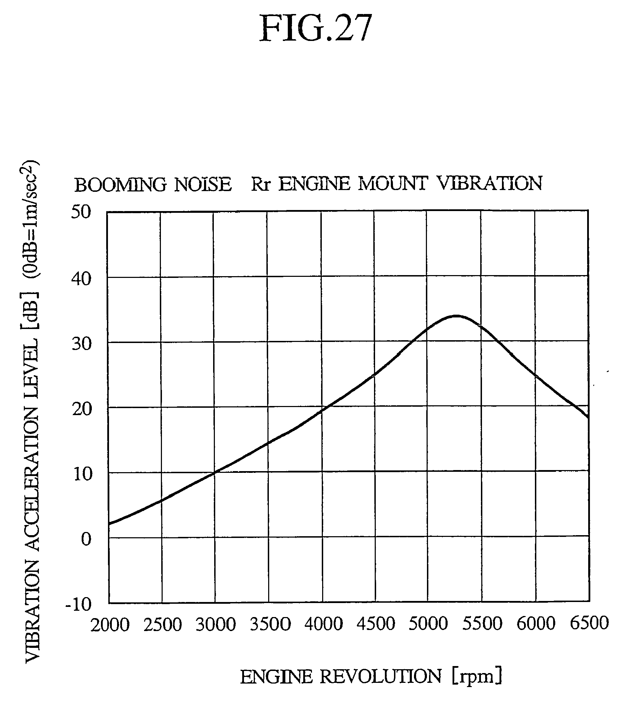

It is known that this vibration varies in a vibration level depending on the engine RPM (revolution per minute), which takes a peak value at an engine RPM in a range of 5000 rpm to 5500 rpm, as shown in FIG. 27.

In order to preclude the vibration of the drive unit U from adversely affecting the vehicle body (vehicle compartment), a rubber insulator is employed in a usual practice as an elastic mount member through which the drive unit U is supported on the vehicle body. The rubber insulator has a relatively increased elasticity, resulting in deterioration in a driving stability of the vehicle. Also, the increased frontal weight of the drive unit U causes a nose-dive during braking.

The propeller shaft is disposed in a floor tunnel which is formed on a vehicle body floor so as to protrude toward an interior of the vehicle compartment.

Since the steel propeller shaft has a large inertial mass, the increased vibration of the drive unit U as described above causes an increase in vibration amplitude of the steel propeller shaft. For this reason, the floor tunnel is required to have an increased space for avoiding interference with the propeller shaft, resulting in reduction in an accommodation space of the vehicle compartment. In order to minimize the vibration amplitude of the propeller shaft, attempts have been made to split the propeller shaft into fore and aft components to mount the ends of the split shafts on the vehicle body floor by means of a center bearing. This raises an issue of increasing vibrations and noise transmitted through the vehicle body floor to the interior of the vehicle compartment.

Japanese Patent Application Laid-open Publication No. 7-223449 discloses a power train with no integral drive unit employed, in which only an engine is installed in a front compartment, a drive unit of three component: a torque converter (clutch) ; a transmission; and a differential installed beneath the transmission, is mounted below a rear floor, and the engine and the torque converter are connected through a steel propeller shaft.

Further, a variety of technologies are disclosed about a transaxle structure where a transmission and a differential are integrally structured. Japanese Patent Application Laid-open Publication No. 11-141531 discloses a structure wherein an axle is connected to a differential of a transaxle through an intermediate shaft. Japanese Patent Application Laid-open Publication No . 10-291423 discloses another structure wherein a gear member is provided with a cylindrical reinforcing member by which a transfer case has an increased strength. Japanese Patent Application Laid-open Publication No. 2002-219955 discloses another structure wherein an engine and transfer are enabled to get closer to one another.

With the power train set forth above, due to the presence of a layout wherein the engine and the transmission, both of which are heavy in weight, are separately disposed in the fore and aft areas of the vehicle body, a weight balance between the fore and aft areas of the vehicle body is made favorable, minimizing the occurrence of nose-dive during braking with a resultant turning ability.

However, since the propeller shaft rotates at the engine rotation speed at all times, the propeller shaft is caused to deflect and vibrate, causing influence on vibrations and noises to be transmitted to the interior or the exterior of the vehicle compartment.

Further, since the torque converter and the transmission are integrally structured, there still remains an issue of an increase in vibrations and noises, as a result of deflections of these component parts, and the occurrence in lockup vibrations.

Additionally, the transmission, which is heavier than the differential, is mounted on an upper side of the differential with a resultant increase in height dimension of the drive unit, causing a difficulty of designing an installation layout of the drive unit. Also, a rear sub frame for mounting the drive unit is required to have an increased thickness and cross sectional area with a resultant increase in strength and rigidity in order to have a capability of adequately bearing dynamic load of the drive unit, resulting in an increase in weight.

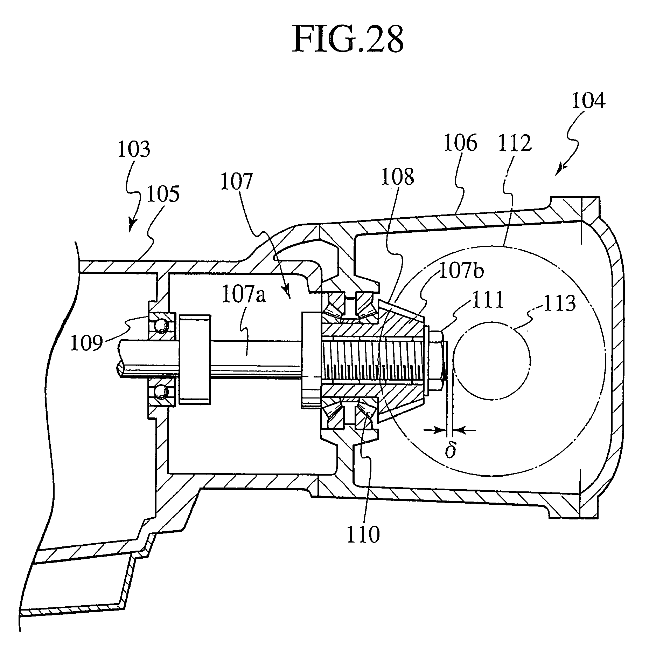

Further, technologies of the related art transaxle structures set forth above encounter various issues to be solved. These issues will be described below with reference to Figs. 28 to 31.

Fig. 28 shows a transaxle structure in which a transmission 103 and a differential 104 are integrally assembled. With such a structure, a transmission case 103a and a differential carrier 106 are connected together in abutting engagement.

Rotatably disposed inside the transmission case 103a and the differential carrier 106 is a differential pinion shaft 107.

The differential pinion shaft 107 consists of an inner differential pinion shaft 107a, which extends through the transmission case 103a and the differential carrier 106, and an outer differential pinion shaft 107b, to which a differential terminal end portion of the inner differential pinion shaft 107a is inserted, that has a distal end with an outer circumferential periphery formed with a gear 108.

The inner differential pinion shaft 107a is supported on a bearing 109 mounted to the transmission case 103a, and the outer differential pinion shaft 107b is supported on a bearing 110 mounted in the differential carrier 106. Screwed onto a distal end of the differential pinion shaft 107 is a preload fastening nut 111. Depending upon an amount of stroke of the preload nut 111 to be screwed, an intensity of preload to be exerted by the baring 110 is determined, and the inner differential pinion shaft 107a and the outer differential pinion shaft 107b are integrally formed.

The fastening nut 111 is held in engagement with an end of a differential ring gear 112 of the pinion shaft 107 in an area near the differential case 113.

With such a structure, the pinion shaft 107 includes at least two differential pinion shafts 107a and 107b, resulting in an increase in the number of component parts.

Further, it is required to provide a given gap δ for preload adjustment between the fastening nut and the differential case 113. With the differential carrier 106 designed within a regulated dimension, restriction occurs in size of the differential case 113.

That is, it becomes hard to increase a size of the differential case 113 to ensure a further increased strength and durability.

Furthermore, the outer differential pinion shaft 107b takes a hollow structure that is liable to be deformed on heat treatment. This adversely affects the fastening action of the preload fastening nut 111, causing a difficulty in determining the preload at a high precision.

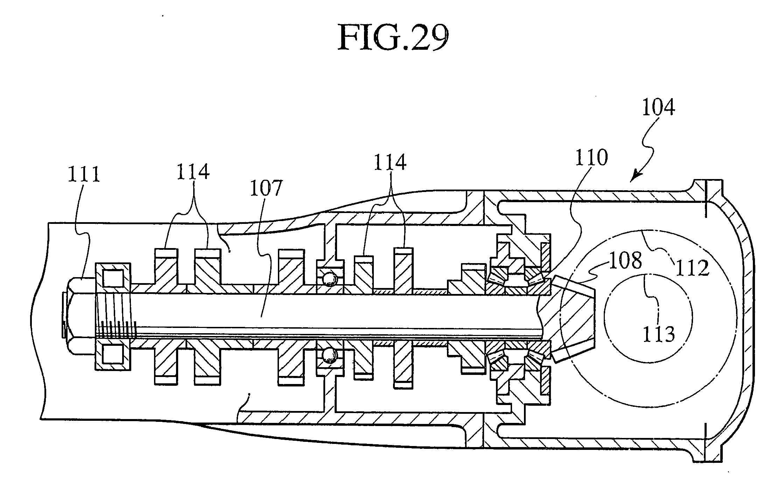

Fig. 29 shows an improved transaxle structure.

Here, a fasteningnut 111 , for applying preload to a bearing 110, is disposed on a distal end of a differential pinion shaft 107 in opposition to a gear 108.

Interposed between the bearing 110 and the fastening nut 111 are plural gears 114 of a transmission 103.

With such a structure, the presence of variations in dimension among the intervening plural gears 114 results in an increase in variation in the intensity of preload.

Also, since the differential pinion shaft 107 becomes elongated in structure, the intensity of preload is not stabilized.

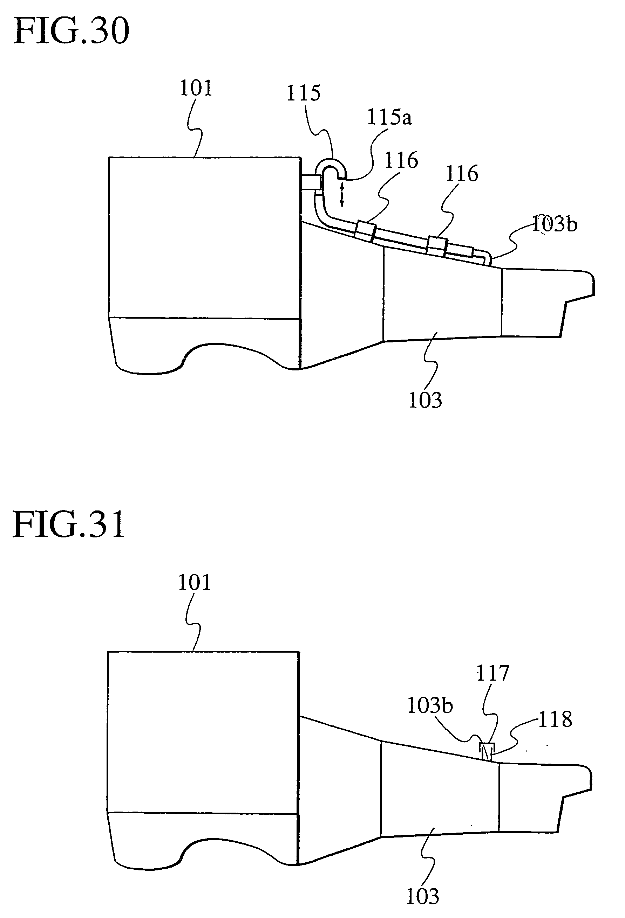

The transmission 103 has a breather through which when internal pressure of the transmission 103 remains positive, the pressure is released, whereas when internal pressure remains negative, the atmospheric air is admitted to cause internal pressure to reach the atmospheric pressure to make breathing. Various issues arising in such a breather device are described below with reference to Figs. 30 and 31.

With a breather device shown in Fig. 30, for the purpose of precluding the entry of water during running on flooded road, a breather hose 115 is caused to extend from an open aperture 103b of the transmission 103 to allow an atmospheric open port 115a to be located in an area (at a high position rearward of the engine compartment) with less flashing of water.

The hose 115 is clamped to an outer side surface of the transmission case 103 by a plurality of fixing clamps 116.

Such a structure results in an increase in length of the hose 115. Thus, a large number of clamps 116 are required, thereby increasing costs.

Further, probabilities occur in which a middle of the hose 115 is collapsed to close the hose. For the transmission with an abnormally increased internal pressure, probabilities occur where oil blows out from the open aperture 103b.

With a breather device shown in FIG. 31, a one-way valve 117 is disposed on an upper end of a short conduit 118 extending from the open aperture 103b of the transmission 103.

With such a structure, as internal pressure of the transmission 103 increases during running on flooded road, the one-way valve 117 is opened to cause a probability in which water is caused to enter. Also, due to splashing of mud, the one-way valve 117 is locked, resulting in a probability with no function of the breather.

The present invention has been made with the above issues in mind.

It would be desirable to be able to provide a vehicle drive system that is able to suppress the occurrence of vibrations resulting from a drive unit system to reduce vibrations and noises and has improved driving stability, turning ability, and an expanded lockup range of a torque converter.

It would also be desirable to be able to provide a vehicle drive system that is able to provide ease of installation layout for a rear drive unit and to contribute to reduction in weight of a vehicle body through miniaturization of a rear sub frame in light weight.

It would also be desirable to be able to provide a vehicle drive system that is able to stabilize an intensity of preload of a bearing through which a differential pinion shaft is supported while providing ease of achieving individual research and development of a transmission and a differential and combination between the transmission and differential in a variety of specifications and providing ease of trouble shooting and replacing component parts.

The present invention provides a vehicle drive system as set forth in claim 1.

The invention will now be described with reference to the accompanying drawings wherein:
Fig. 1 is a side view illustrating a layout condition of a vehicular drive mechanism of a first embodiment according to the present invention.
Fig. 2 is a cross sectional view taken on line II-II of Fig. 1.
Fig. 3 is a side view illustrating a layout condition of a rear drive unit of a second embodiment according to the present invention.
Fig. 4 is a perspective view illustrating a condition where the rear drive unit shown in Fig. 3 is installed.
Fig. 5 is an exploded perspective view illustrating a tunnel portion and a mount member of a rear seat cross member of Fig. 4.
Fig. 6 is a cross sectional view taken on line VI-VI of Fig. 5.
Fig. 7 is a cross sectional view taken on line VII-VII of Fig. 5.
Fig. 8 is a cross sectional view taken on line VIII-VIII of Fig. 5.
Fig. 9 is a cross sectional view taken on line IX-IX of Fig. 5.
Fig. 10 is an exploded perspective view illustrating a tunnel portion and a mount member of a rear seat cross member in a third embodiment according to the present invention.
Fig. 11 is a rear view of a rear seat cross member of a modified form of the third embodiment according to the present invention.
Fig. 12 is a cross sectional view taken on line XII-XII of Fig. 11.
Fig. 13 is a perspective view illustrating a condition, in which a rear drive unit is installed, in a fourth embodiment according to the present invention.
Fig. 14 is a perspective view of a mount portion of a transmission stay of Fig. 13 as viewed from an area below a floor.
Fig. 15 is a bottom view illustrating a condition in which the rear drive unit of Fig. 13 is installed.
Fig. 16 is a rear view illustrating the transmission stay of Fig. 13.
FIG. 17 is a cross sectional view taken on line XVII-XVII of FIG. 15.
Fig. 18 is a bottom view illustrating a condition, in which a rear drive unit is installed, in a fifth embodiment according to the present invention.
Fig. 19 is a side view illustrating a layout condition of a vehicular drive mechanism of a sixth embodiment according to the present invention.
Fig. 20 is a side view illustrating a layout condition of the drive mechanism shown in Fig. 19.
Fig. 21 is a cross sectional view taken on line XXI-XXI of Fig. 20.
Fig. 22 shows a transaxle structure of a vehicular drive mechanism, of a seventh embodiment according to the present invention, partly in cross section taken along an axis of an output shaft.
Fig. 23 is a schematic view illustrating an overall structure of the transaxle structure shown in Fig. 22.
Fig. 24 shows a transaxle structure of a vehicular drive mechanism, of an eighth embodiment according to the present invention, partly in cross section taken along an axis of an output shaft.
Fig. 25 is a schematic view illustrating an overall structure of the transaxle structure shown in Fig. 24.
Fig. 26 is a side view illustrating a comparative example of a drive unit.
Fig. 27 is a graph illustrating a vibration characteristic of the comparative example of the drive unit shown in Fig. 26.
Fig. 28 is an illustrative view showing one comparative example of a transaxle structure.
Fig. 29 is an illustrative view showing the other comparative example of a transaxle structure.
Fig. 30 is an illustrative view showing one comparative example of a breather structure.
Fig. 31 is an illustrative view showing the other comparative example of a breather structure.

Embodiments of the present invention will be explained below with reference to the drawings, wherein like members are designated by like reference characters.

### First Embodiment

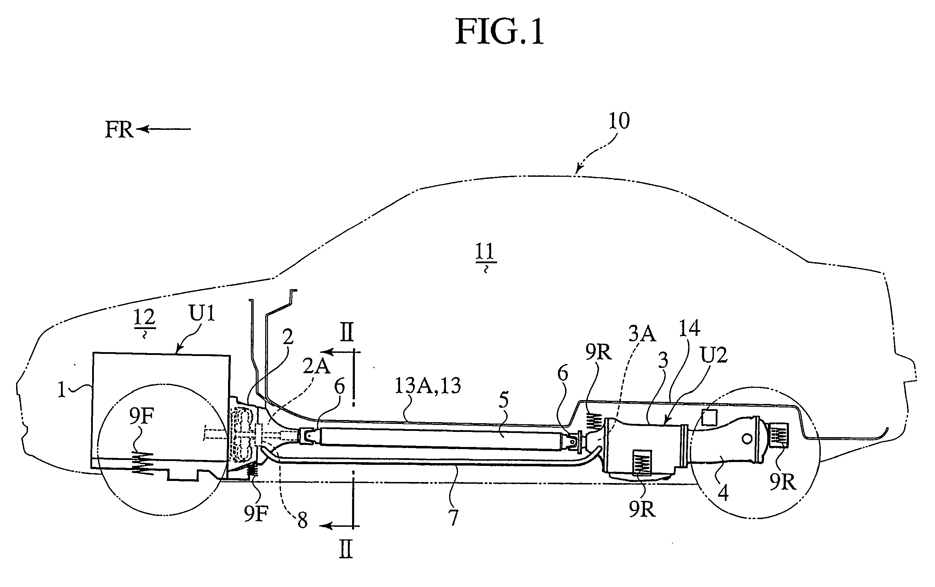

With a drive system of the embodiment, as shown in Fig. 1, a torque converter 2 and a transmission 3 are separated from one another. The torque converter 2 is assembled to a rear end of an engine 1 in a unitary structure to form a front drive unit U1 . The transmission 3 is integrally assembled with a front end of a differential 4 to form a rear drive unit U2.

A vehicle of this embodiment is an A/T vehicle of a front engine with a rear drive type. The vehicle is shown as including a vehicle body 10 that has a vehicle compartment 11 and a front compartment 12, located in front of the vehicle compartment 11, in which the front drive unit U1 is installed. The rear drive unit U2 is mounted in an area beneath a rear floor 14. Thus, the front and rear drive units U1, U2 are separately located in front and rear areas of the vehicle body 10.

The front drive unit U1 is resiliently supported on sub frames or vehicle body front frame members at three mount positions, involving central portions between left and right ends and a rear portion, by means of mount members 9F. The rear drive unit U2 is resiliently supported on the sub frames or vehicle body rear frame members at four mount positions, involving central portions between left and right ends, a forward portion and a rear portion, by means of mount members 9R.

The torque converter 2 of the front drive unit U1 has an output shaft connected to an input shaft of the transmission 3 through one propeller shaft (drive shaft) 5 and a universal joint 6, thereby permitting power output to be delivered from the front drive unit U1 to the rear drive unit U2. The propeller shaft 5 is received in a floor tunnel 13A formed on a front floor 13.

The propeller shaft 5 has a structure made of elastic material that is light in weight and has an excellent vibration damping property. One example of such a structure includes a cylindrical body made of fiber reinforced plastic material reinforced with fibers, such as carbon fiber or glass fiber, in a solid or hollow shape in cross section to have a strength sufficient for transmitting power output from the front drive unit U1 to the rear drive unit U2.

The torque converter 2 is a general type of a torque converter which has a pump impeller, a turbine runner, a stator and a lock-up clutch. The torque converter 2 has an oil chamber 2A that is connected to an oil chamber 3A of the transmission 3 in fluid communication through a hydraulic conduit 7.

Disposed in any one of the oil chambers 2A and 3A (the oil chamber 2A in this embodiment) is an oil pump 8 by which line pressure is maintained between the torque converter 2 and the transmission 3.

The oil pump 8 is incorporated in the torque converter 2.

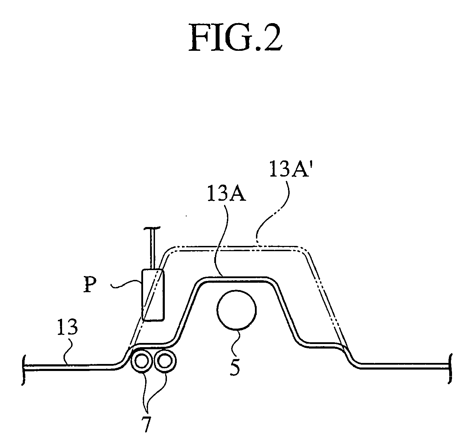

As shown in Fig. 2, the hydraulic conduits 7 extend through the floor tunnel 13A together with the propeller shaft 5 in a fore and aft direction at positions beneath and closer to one side (on a left side in this embodiment as viewed in Fig. 2) of the propeller shaft 5.

With the drive system of the A/T vehicle of this embodiment, the engine 1, forming a vibration generating source, and the transmission 3 are separately located in fore and aft positions of the vehicle body 10, respectively. This enables interference in vibration between the engine 1 and the transmission 3 to be avoided, thereby reducing a vibration level.

Further, the propeller shaft 5 is formed of elastic material that is light in weight and has excellent vibration damping property. Due to the vibration damping action of the propeller shaft 5 in which the propeller shaft 5 elastically twists, vibration transmission between the front drive unit U1 and the rear drive unit U2 can be minimized.

Furthermore, since the torque converter 2 and the transmission 3 are separate from one another, vibrations and noises, which would occur due to the deflection of a unitary structure formed with these component parts, can be avoided.

From the foregoing description, vibrations and noises of an entire drive system can be minimized, resulting in remarkably improved silence keeping ability even with no use of a large volume of noise and sound insulators inside and outside the vehicle compartment 11.

Moreover, the front drive unit U1 having the engine 1 and the torque converter 2 and the rear drive unit U2 having the transmission 3 and the differential 4 are separately mounted in the fore and aft positions of the vehicle, respectively. This provides a favorable weight balance between the fore and aft positions of the vehicle. Since the weight of the front drive unit U1 is reduced and resulting vibration level is decreased, no need arises for the mount members 9F, 9R, through which associated component parts are supported, to have vibration absorbing performances (under softened conditions) determined at high levels, respectively. That is, it becomes possible to increase a freedom in designing elasticity and layout positions of the mount members 9F, 9R. When using the mount members 9F, 9R with elasticity set to an appropriate level, a front area of the vehicle is able to have a reduced weight and, in addition thereto, nose-dive occurring when braking the vehicle can be suppressed,resultinginimprovement over turning brake ability, driving stability and turning capability.

Additionally, the propeller shaft 5 has elasticity to damp shocks occurring during lock-up of the torque converter 2. Also, the propeller shaft 5 precludes vibration from being transmitted between the front drive unit U1 and the rear drive unit U2 in a manner as previously described. Thus, it becomes possible for a lock-up range to be expanded for the purpose of avoiding the vibrations from occurring during lock-up. As a result, even though the vehicle is the A/T vehicle, this vehicle is able to have the same torque response as that of an M/T (manual transmission), resulting in improvement over traveling ability. Also, due to the expanded lock-up range, a slipping loss in power output is eliminated, providing improved fuel consumption.

Further, since the propeller shaft 5 is formed of elastic material that is light in weight and has vibrating damping capability, the propeller shaft 5 can be avoided from vibrating in a large amplitude. No need arises for a substantially central area of the propeller shaft 5 to be mounted onto the front floor 13, thereby avoiding the front floor 13 from suffering from vibrations. Also, the front tunnel 13A has a smaller cross sectional area than that of the floor panel of the related art structure, designated at 13A' in Fig. 2. For this reason, an accommodation floor space of the vehicle compartment 11 can be expanded. Another advantage resides in that a front area of the vehicle compartment 11 is also expanded for a space of locating various pedals, providing an increased freedom in designing a pedal layout.

With the structure of this embodiment, the propeller shaft 5 is formed of fiber reinforced plastic resin reinforced with fibers such as carbon fiber and glass fiber. This allows the propeller shaft 5, which is light in weight and rich in vibration damping capability, to be obtained while having an increased mechanical strength.

Further, both the oil chambers 2A, 3A of the torque converter 2 and transmission 3 are connected to one another in fluid communication through the hydraulic conduit 7. Disposed in the oil chamber 2A is the oil pump 8 that is commonly used for the torque converter 2 and the transmission 3. For this reason, the number of component parts is reduced, contributing to reduction in costs and weight.

The hydraulic conduit 7 is piped inside the floor tunnel 13A at an area outside the vehicle compartment 11. Since oil inside the hydraulic conduit 7 is cooled through heat exchange with the atmospheric air, an oil cooler, which is separately provided, can be minimized.

Furthermore, the rear drive unit U2, composed of the transmission 3 and the differential 4 assembled thereto in the unitary structure, is resiliently supported on the vehicle body 10 through the mount members 9R. For this reason, the rear drive unit U2 has a greater span between fore and aft mount points than that between the fore and aft portions of a single piece of the differential. Accordingly, no need arises for the mount members 9R to be determined to be harder in consideration of wind-up. That is, the mount members 9R can be determined to be comparatively soft, enabling vibrations and noises to be avoided from being transmitted from the rear drive unit U2 to the vehicle compartment 11.

With reduction in vibrations and noise levels of the entire drive system set forth above, the mount members 9F of the front drive unit U1 and the mount members 9R of the rear drive unit U2 can be determined to have appropriate elasticity, resulting in a capability of providing improved riding comfort.

### Second Embodiment

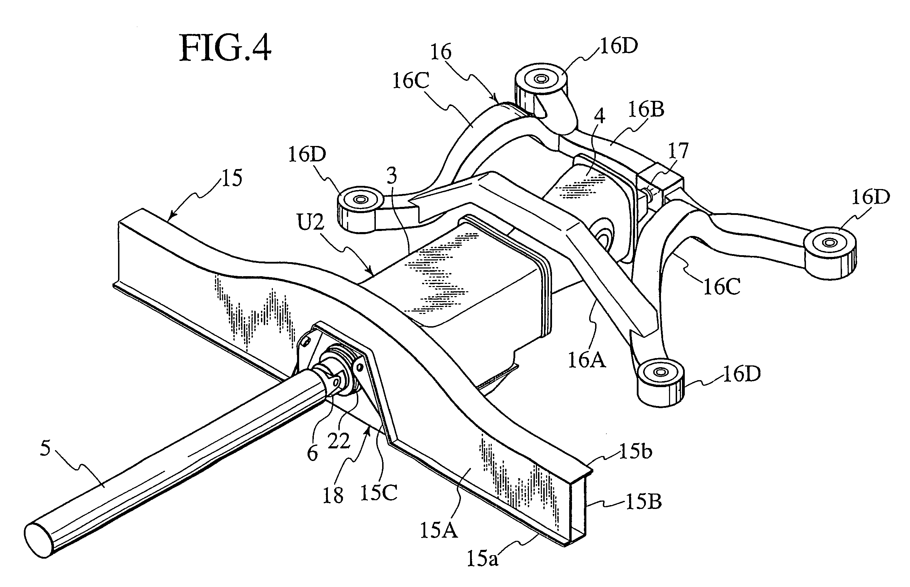

The second embodiment differs from the first embodiment in that the rear drive unit U2 is resiliently supported in a way to straddle a rear seat cross member 15 and a rear sub frame 16 as shown in Fig. 4.

Now, description is made focusing on such a different point.

The rear sub frame 16 supports the rear drive unit U2 at a rear end thereof. The rear sub frame 16 is formed with fore and aft frames 16A, 16B and a pair of side frames 16C in planar parallel crosses. The rear sub frame 16 has both fore and rear distal ends formed with rest portions 16D through which the rear sub frame 16 is coupled to a floor frame member joined to a lower surface of the rear floor 14. The differential 4 has a rear end that is resiliently supported on the rear frame 16B by means of a vibration-proof bush 17 that is located in and extends through a central area, along a vehicle widthwise direction, of the aft frame 16B in a fore and aft direction.

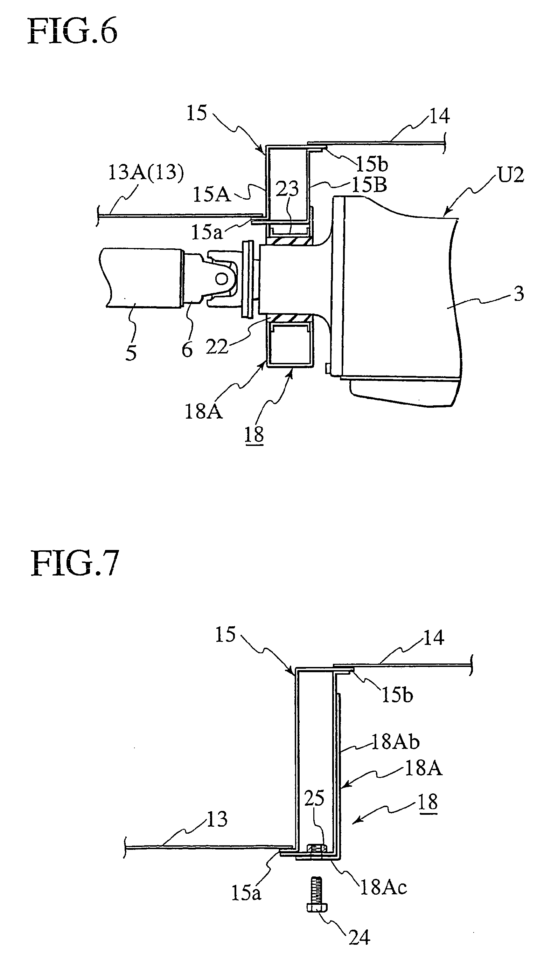

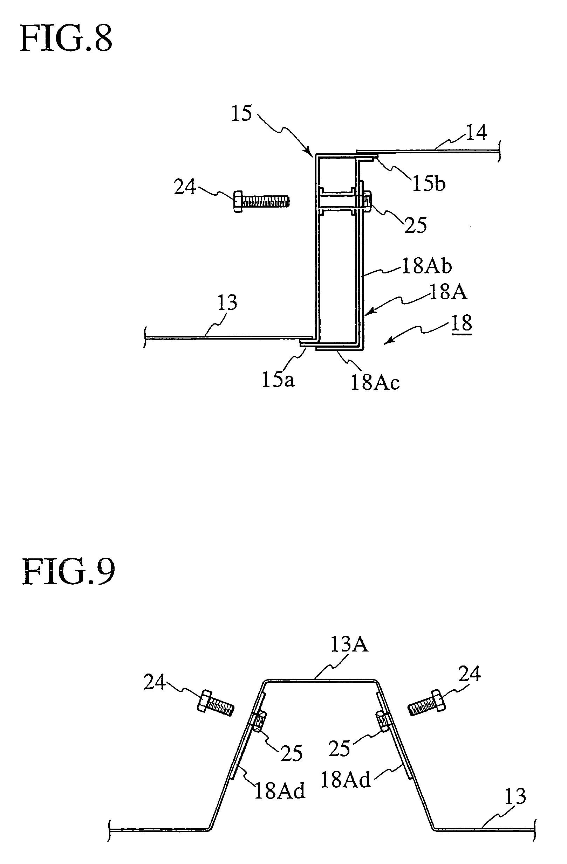

In the meanwhile, the transmission 3 is supported by the rear seat cross member 15 at a front portion thereof. The rear seat cross member 15 is formed in a closed cross sectional structure with a front panel 15A and a rear panel 15B as shown in Figs. 6 to 9. A rear end of the front floor 13 is stacked on and joined to a front lower flange 15a of the rear seat cross member 15. Likewise, a front end of the rear floor 14 is stacked on and joined to a rear upper flange 15b of the rear seat cross member 15.

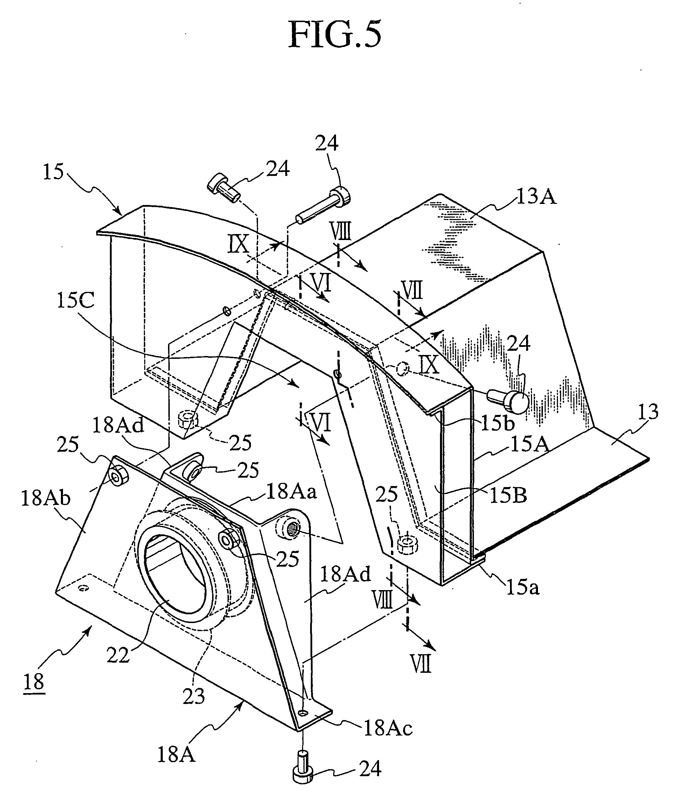

Formed on a central area of the rear seat cross member is a tunnel portion 15C that is contiguous with the floor tunnel 13A as shown in Figs. 4 and 5. The front portion of the transmission 3 is resiliently supported by the tunnel portion 15C through a mount member 18.

The mount member 18 has a base member 18A, and a hollow cylindrical vibration-proof bush 22 that extends through the base member 18A. The base member 18A has front and rear walls 18Aa, 18Ab that close fore and aft openings of the tunnel portion 15C of the rear seat cross member 15, and a bottom wall 18Ac from which the front and rear walls 18Aa, 18Ab are upright. The vibration-proof bush 22 extends through substantially central portions of the front and rear walls 18Aa, 18Ab of the base member 18A.

The vibration-proof bush 22 is fitted into and secured to a hollow cylindrical collar 23 that straddles and is joined to the front and rear walls 18Aa, 18Ab.

The front portion of the transmission 3 is inserted to the base member 18A through the vibration-proof bush 22. Thus, the transmission 3 is sub assembled to the mount member 18. The sub-assembled transmission 3 is mounted onto the rear seat cross member 15 by inserting the base member 18A from a rear area of the tunnel portion 15C.

The bottom wall 18Ac of the base member 18A is formed in a way to straddle a lower opening area of the tunnel portion 15C. The rear wall 18Ab of the base member 18A is formed in a substantially trapezoid frontal configuration to match an opening shape of the rear opening of the tunnel portion 15C and has a larger opening surface area than that of the rear opening.

The front wall 18Aa o the base member 18A is formed in a substantially trapezoid shape to match the opening shape of the floor tunnel 13A and has a size to internally mate with the floor tunnel 13A. Left and right side ends of the front wall 18Aa are bent forward to form flanges 18Ad.

The mount member 18 is inserted to the tunnel portion 15C from the lower area thereof under a condition where the mount member 18 is sub assembled to the frontportion of the transmission 3 in a manner as set forth above. The bottom wall 18Ac of the base member 18A is placed over left and right lower surfaces of the bottom walls of the rear seat cross member 15 so as to straddle a lower opening area of the tunnel portion 15C to be fixedly fastened thereto by means of bolts 24 and nuts 25. Likewise, the rear wall 18Ab of the base member 18A is placed over left and right rear panels 15B of the rear seat cross member 15 to straddle a rear opening area of the tunnel portion 15C to be fixedly fastened thereto by means of bolts 24 and nuts 25. The front wall 18Aa of the base member 18a is positioned in place so as to allow the flanges 18Ad to overlap left and right walls of the tunnel portion 15C under an internally mated condition to be fixedly fastened by bolts 24 and nuts 25. Thus, the mount member 18 is mounted to the rear seat cross member 15 under a condition where fore and aft portions and a bottom portion are closed.

The nuts 25 for fastening the front and rear walls 18Aa, 18Ab are preliminarily fixed to the mount member 18 as welded nuts. The nuts 25 for fastening the bottom wall 18 are preliminarily fixed to a bottom wall inner surface of the rear seat cross member 15. Screwing the bolts 24 from a lower area of the floor fastens the bottom walls 18Ac to the rear seat cross member 15. Both the flanges 18Ad of the front wall 18Aa and the rear wall 18Ab are fixedly fastened to the rear seat cross member 15 at an area inside the vehicle compartment 11 by means of the bolts 24.

With the drive system of the A/T vehicle of this embodiment set forth above, in addition to the advantages of the first embodiment, the following advantages are obtained.

That is, with the rear drive unit U2, the transmission 3 is assembled to the front end of the differential 4 in the unitary structure. For this reason, it becomes possible to avoid the rear drive unit U2 from increasing in height. Accordingly, no need arises for big change, that would cause an increase in height of the rear floor 14 above the ground, to be made in a floor structure while providing an ease of layout for mounting the rear drive unit U2 to the lower area of the floor.

The rear drive unit U2 is supported on the rear frame 16B of the rear sub frame 16 at the rear end of the differential 4 and supported on the tunnel portion15C of the rear seat cross member 15 by means of the mount member 18. This allows dynamic load applied to the rear drive unit U2 to be born by the rear seat cross member 15. The span between supporting points at fore and rear areas of the rear drive unit U2 is expanded, resulting in a reduction in driving reaction force to be dispersed to the fore and aft support points. Since no driving reaction force is directly applied to the front frame 16A of the rear seat cross member 15, the rear sub frame 16 has the least thickness and cross sectional area. Particularly, the front frame 16A may be dispensed with depending on circumstance. Thus, since the rear sub frame 16 is able to have a decreased strength and rigidity, the rear sub frame 16 can be minimized and made light in weight, resulting in a capability of reducing a weight of the vehicle body.

With the structure of this embodiment, the presence of the vibration-proof bush 22 provided in the mount member 18 reduces vibration of the transmission 3, thereby avoiding the vibration from being directly transmitted to the rear seat cross member 15. Further, the mount member 18 is sub assembled to the front portion of the transmission 3 by means of the vibration-proof bush 22. Inserting the base member 18A to the tunnel portion 15A from the lower area thereof allows the sub assembled mount member 18 to be mounted to the rear seat cross member 15. That is, the mount member 18 can be easily mounted to the vehicle body subsequent to preliminarily assembling the propeller shaft 5, the transmission 3 and the differential 4. Thus, no adverse affect of these component parts occurs on work for assembling the rear drive unit U2 from the lower area of the floor.

Among other things, the bottom wall 18Ac of the base member 18A straddles the lower opening of the tunnel portion 15C and fixedly fastened to the lower surfaces of the left and right bottom walls of the rear seat cross member 15. This prevents the lower opening of the tunnel portion 15C from expanding in a lateraldirection. Inaddition, the mount member 18 is connected to and fixedly fastened to the tunnel portion 15C with the front and rear walls 18Aa, 18Ab closing the front and rear openings of the rear seat cross member 15. This allows a strength and rigidity, deteriorated as a result of forming the tunnel portion 15 in the rear seat cross member 15, to be adequately compensated.

Also, the front wall 18Aa is internally mated with and fitted to the floor tunnel 13A and fixedly fastened to the left and right walls thereof. Further, the rear wall 18Ab straddles the rear opening of the tunnel portion 15C and fixedly fastened to the left and right rear panels 15B of the rear seat cross member 15. Accordingly, the structure around the tunnel portion 15C has a further increased rigidity.

The bottom wall 18Ac of the base member 18A is fixedly fastened to the rear seat cross member 15 from the lower area thereof. Both the front wall 18Aa and the rear wall 18Ab can be fixedly fastened to the rear seat cross member 15 in the area inside the vehicle compartment 11. Thus, the fastening work can be achieved in a space with an increased margin, resulting in improvement over mounting workability of the base member 18A.

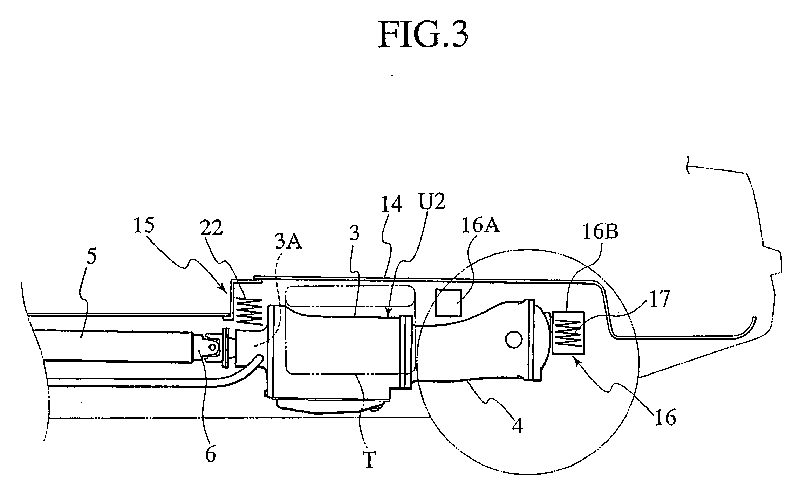

As shown in Fig. 3, with a fuel tank T, which laterally extends, mounted to the floor on a lower side thereof in an area above the transmission 3, the fuel tank T is installed on the floor at the lower side thereof prior to mounting the rear drive unit U2 thereto. In such case, the base member 18A of the mount member 18 can be inserted to the tunnel portion 15C from the lower area of the floor and the fastening work can be achieved from the inside of the vehicle compartment, whereby no obstruction occurs to the fastening work of the fuel tank T, resulting in an increase in workability.

### Third Embodiment

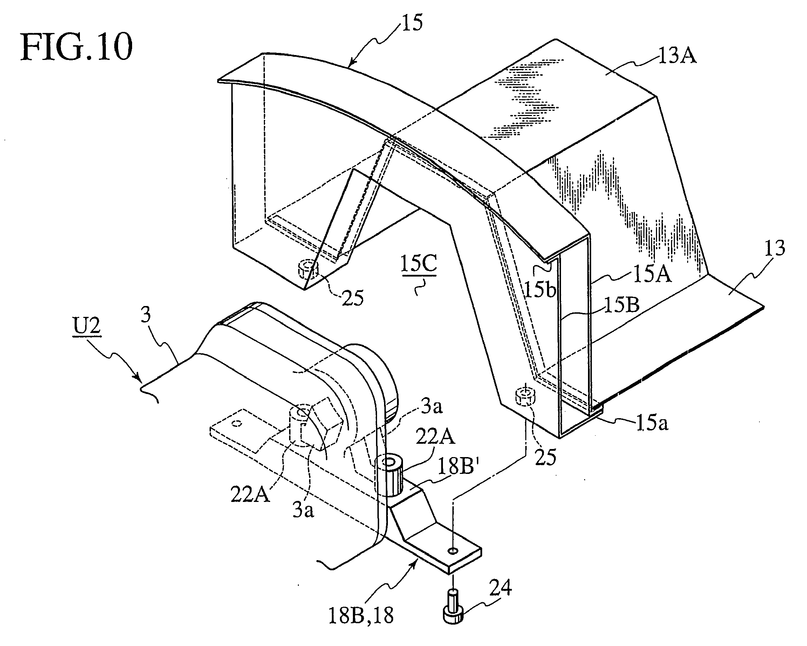

Fig. 10 shows a vehicle drive system of a third embodiment according to the present invention. Hereinafter, the same component parts as those of the second embodiment bear like reference numerals to omit redundant description.

With the structure of the third embodiment, the mount member 18 is a stay 18B having a vibration-proof mount member 22A by which the front portion of the transmission 3 is supported.

The stay 18B is made of lightweight metal, such as aluminum alloy, formedbydie-casting. The stay 18B is formed ina structure that straddles the lower opening of the tunnel portion 15 of the rear seat cross member 15. Thus, the stay 18B has both lateral ends to be fixedly fastened to the left and right lower surfaces of the bottom walls of the rear seat cross member 15 on both sides of the lower opening.

Formed on a substantially central area of the stay 18B is a ridge portion 18B' , on which a vibration-proof mount member 22A is located.

Formed on a lower surface of the transmission 3 at the forward area thereof so as to protrude are a pair of left and right leg portions 3a to which the stay 18B is fixedly fastened by means of the vibration-proof mount member 22A. Thus, the stay 18B is sub assembled to the front portion of the transmission 3.

Accordingly, with the structure of this embodiment, the stay 18B of the mount member 18 can be assembled from an area below the floor at the rear drive unit U2 and can be fixedly fastened to the bottom wall of the rear seat cross member 15 by means of bolts from a lower side thereof, resulting in improved workability.

Further, the mount member 18 is the stay 18B with a simplified structure. Also, the stay 18B laterally straddles the lower opening of the tunnel portion 15C and is fixedly fastened to the rear seat cross member 15. Therefore, this avoids the lower opening of the tunnel portion 15C from expanding, ensuring a circumferential part of the tunnel portion 15 to have an increased rigidity.

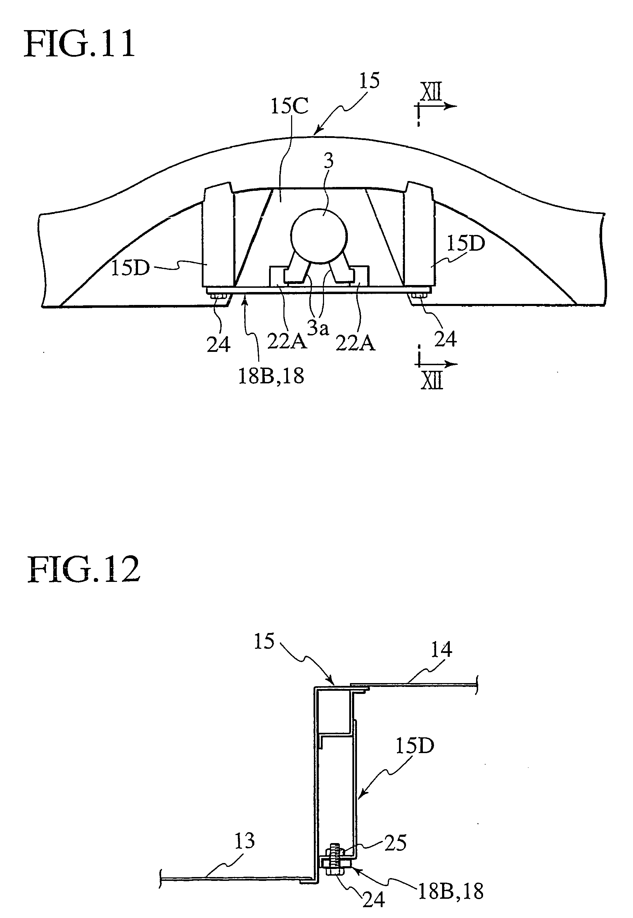

Figs. 11 and 12 show a modified form of the vehicle drive system of the third embodiment. In this modified form, mount brackets 15D are unitarily joined to left and right side portions of the tunnel portion 15C at a rear side of the rear seat cross member 15. The mount brackets 15D have box-shaped configurations that extend downward at both left and right sides of the tunnel portion 15C. The stay 18B straddles bottom walls of the left and right mount brackets 15D and is fixedly fastened thereto by means of bolts 24 and nuts 25. The structure of this modified form has the same advantages as those of the second embodiment.

### Fourth Embodiment

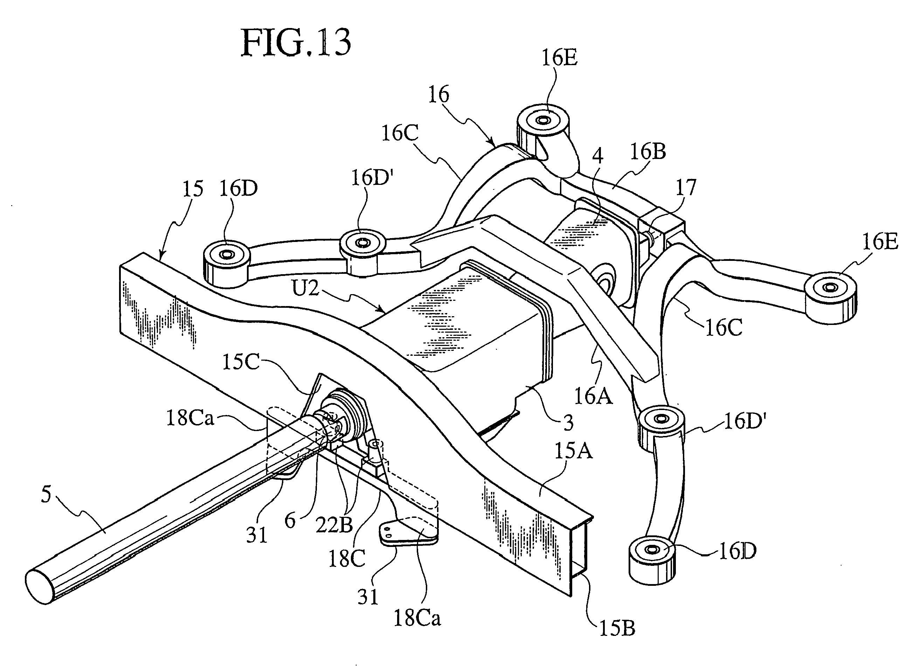

As shown in Fig. 13, a structure of a fourth embodiment according to the present invention differs from the second embodiment in that the front portion of the transmission 3 of the rear drive unit U2 is fixed secured to the rear seat cross member 15 by means of a transmission stay 18C and in respect of a structure of a rear sub frame 16.

Hereinafter,descriptionismade ofsuch different points.

The rear sub frame 16, which supports the rear end of the differential 4 of the rear drive unit U2 is formed in parallel crosses on a plane by fore and aft frames 16A, 16B and a pair of side frames 16C. The rear sub frame 16 has fore and aft frame components formed with protruding rest portions 16D, 16D' , 16E. The rear sub frame 16 is coupled to the lower surface of the rear side member 26, serving as a floor frame member, by means of these rest portions. The rear side member 26 is joined to the lower side portions of the rear floor 14 and extends in a fore and aft direction of the vehicle.

The forward rest portions 16D, 16D' are fixedly fastened to curved portions of the rear side members 26 that assume respective positions closer to forward areas of rear wheel houses. Coupled to respective lower surfaces of the rest portions 16D, 16D' are rear sub frame stays 27 that straddle the associated rest portions, resulting in an increased supporting rigidity.

The rearmost rest portions 16E are fixedly fastened to respective high rigidity portions of a structure where the rear side members 26 are connected through a rear cross member 28.

Resiliently supported on a rear frame 16B of the rear sub frame 16 via vibration-proof bush 17 is a rear end of the differential 4. The vibration-proof bush 17 extends in the fore and aft direction through a substantially central area, in the vehicle widthwise direction, of the rear frame 16B.

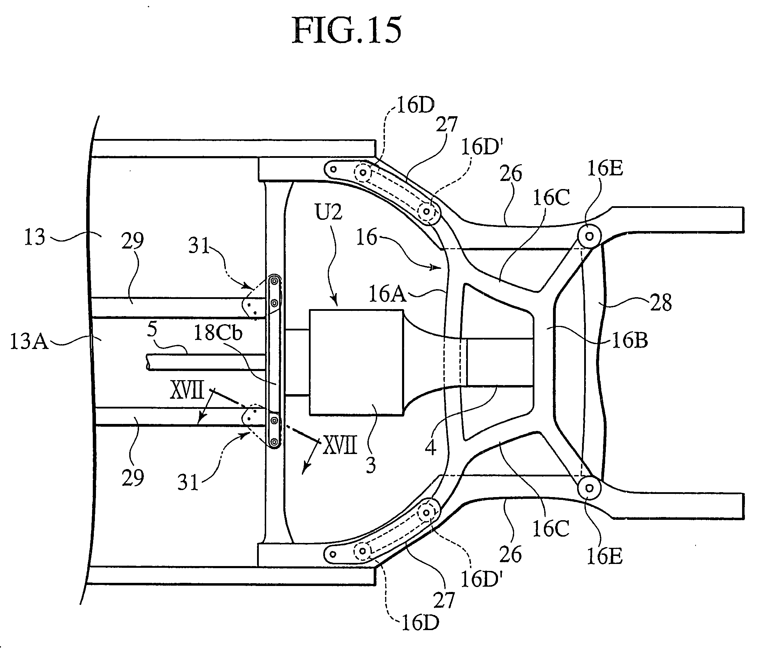

In the meanwhile, the front portion of the transmission 3 is supported by the rear seat cross member 15. As shown in Figs. 13 to 17, the rear seat cross member 15 is formed in a closed configuration with the front panel 15A and the rear panel 15B. The rear end of the front floor 13 overlaps the lower portion of the front end of the rear seat cross member 15 and is joined thereto. The front end of the rear floor 14 overlaps an upper portion at rearward end of the rear seats cross member 15 and is joined thereto.

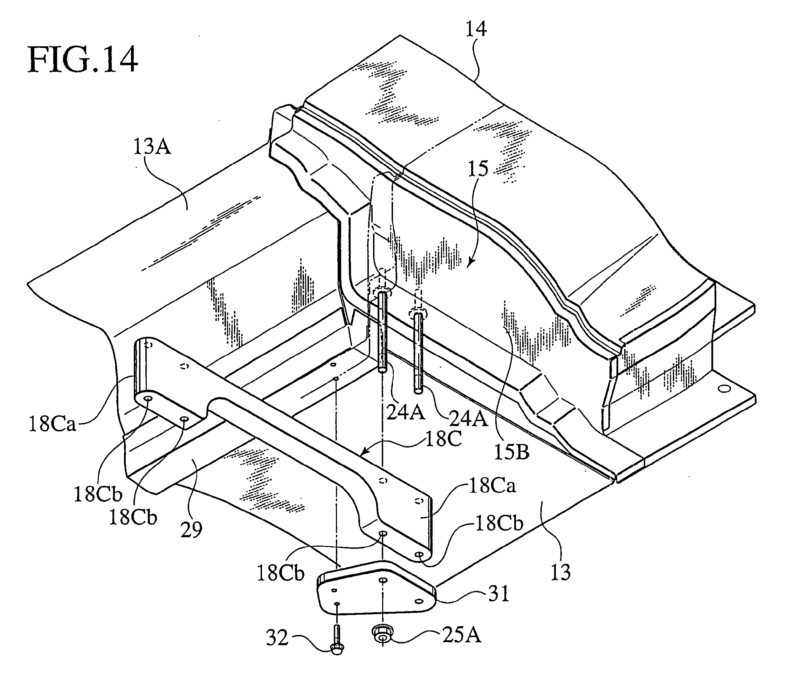

The rear seat cross member 15 is formed with the tunnel portion 15C that is contiguous with the floor tunnel 13A as shown in Figs. 13 and 14. The front portion of the transmission 3 is supported in the tunnel portion 15C through the transmission stay 18C.

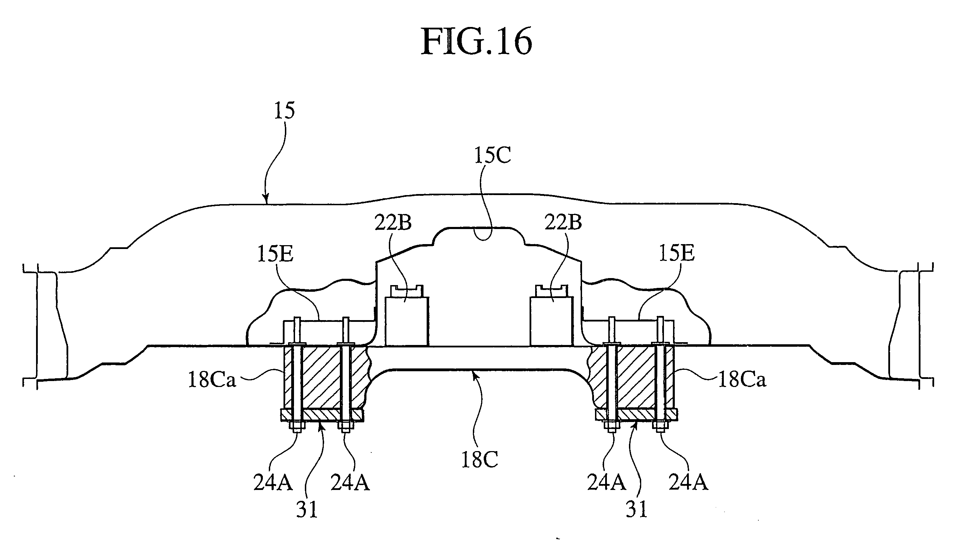

The transmission stay 18C is formed of casting material made of lightweight metallic material such as aluminum alloy. The transmission stay 18C straddles the lower sides of the tunnel portion 15C in the vehicle widthwise direction. Both side end portions of the transmission stay 18C are formed with mounting apertures 18Cb. Inserted to the mounting apertures 18Cb are stud bolts 24A that protrude upward from a lower surface of the rear seat cross member 15, i.e., a lower surface of the rear panel 15B. Screwing nuts 25A onto the stud bolts 24A from a lower side allows the transmission stay 18C to be fixedly fastened. As shown in Figs. 13 and 16, the transmission stay 18C has an upper surface carrying vibration-proof members 22B, by which the front portion of the transmission 3 is resiliently supported.

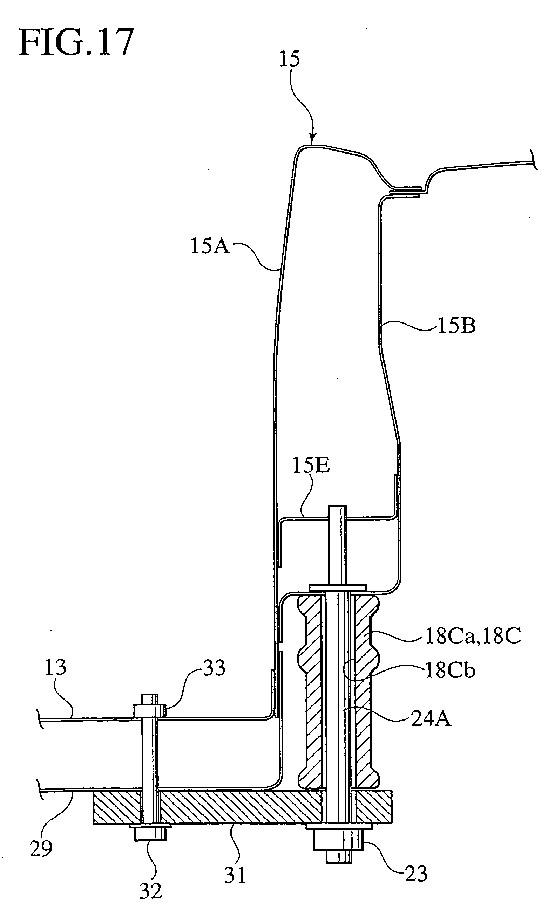

As shown in Fig. 17, an upper end of each stud bolt 24A straddles a lower surface of the rear panel 15B and a reinforce 15E joined to the rear panel 15B in the vicinity of the lower surface thereof and fixedly secured thereto in multiple stages. Thus, the transmission stay 18C has an increased supporting stability.

The both side end portions 18Ca of the transmission stay 18C are formed so as to protrude downward such that lower surfaces of the side end portions 18Ca have the same ground clearance as a lower surface of a tunnel reinforcing member 29 that is disposed along both lower side edges of the floor tunnel 13A. Reinforcing stays 31 straddle and are mounted to the mount portions of the both side end portions 18Ca and the tunnel reinforcing member 29, respectively.

The reinforcing stays 31 are formed in a flat plate configuration by the castingmaterial as that of the transmission stay 18C. A rear end of the reinforcing stay 31 is fixedly fastened to the transmission stay 18C by the stud bolts 24A and nuts 25A. A front end of the reinforcing stay 31 is fixedly fastened to the tunnel reinforcing member 29 by a weld nut 33, fixed to the floor 13, and bolts 32 vertically extending through the tunnel reinforcing member 29 and screwed onto the nuts 33 , respectively.

With the structure of the fourth embodiment set forth above, the front portion of the transmission 3 is supported by the rear seat cross member 15 by means of the transmission stays 18C like in the second embodiment, providing the same advantages as those of the second embodiment.

Further, the reinforcing stays 31 straddle and are mounted to the mount portions of both the left and right side end portions 18Ca and the tunnel reinforcing member 29. The reinforcing stays 31 suppresses the transmission stay 18C from vibrating in the fore and aft direction. For this reason, the transmission stay 18C has an increased rigidity, which influences on noise and vibration performance, in the fore and aft direction with respect to the mount portions of the rear seat cross member 15. Also, the support of the front portion of the transmission 3 is stabilized. In addition, it becomes possible for dynamic load of the rear drive unit U2 to be born not only by the rear seat cross member but also by the tunnel reinforcing member 29 , serving as the floor frame, and the floor tunnel 13A. This allows an entire support of the rear drive unit U2 to be further stabilized.

### Fifth Embodiment

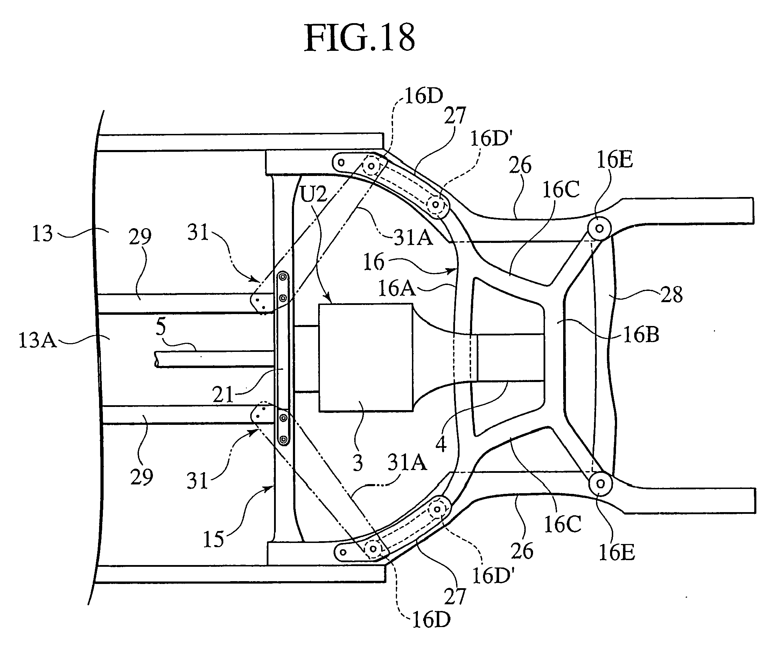

As shown in Fig. 18, the fifth embodiment differs from the fourth embodiment in that the rear end portions of the reinforcing stays have extensions 31A. The extensions 31A extend rearward and outward in the vehicle widthwise direction from the mount positions of the reinforcing stays 31, i.e., from a position wherein the reinforcing stays 31 are fixedly fastened to the rear seat cross member 15 together with the transmission stay 18C.

Rear end portions of the extensions 31A overlap rear sub frame stays 27 at a lower side of the rear floor 14 and are coupled to rear side members 26 together with the rest portions 16D of the forward areas of the rear sub frames 16, respectively.

Consequently, the structure of the fifth embodiment has the same advantages as those of the fourth embodiment and, in addition, the rear end portions of the extensions 31A of the reinforcing stays 31 can be fixedly secured to the circumferential areas of the mount portions of the front end portions of the rear sub frame 16, respectively. Especially, with this embodiment, the rear end portions of the extensions 31A fixedly fastened to the rear side members 26 together with the rest portions 16D of the forward areas of the rear sub frame 16. For this reason, mount portions of the forward areas of the rear sub frame 16 are reinforced with the reinforcing stays 31 to have increased rigidities. Also, tension load acting on the rear sub frame 16 in a rearward direction is dispersed and born by the rear seat cross member 15 and the tunnel reinforcing member 29. This enables the rear side members 26 and the rear floor 14 to prevent from being deformed.

### Sixth Embodiment

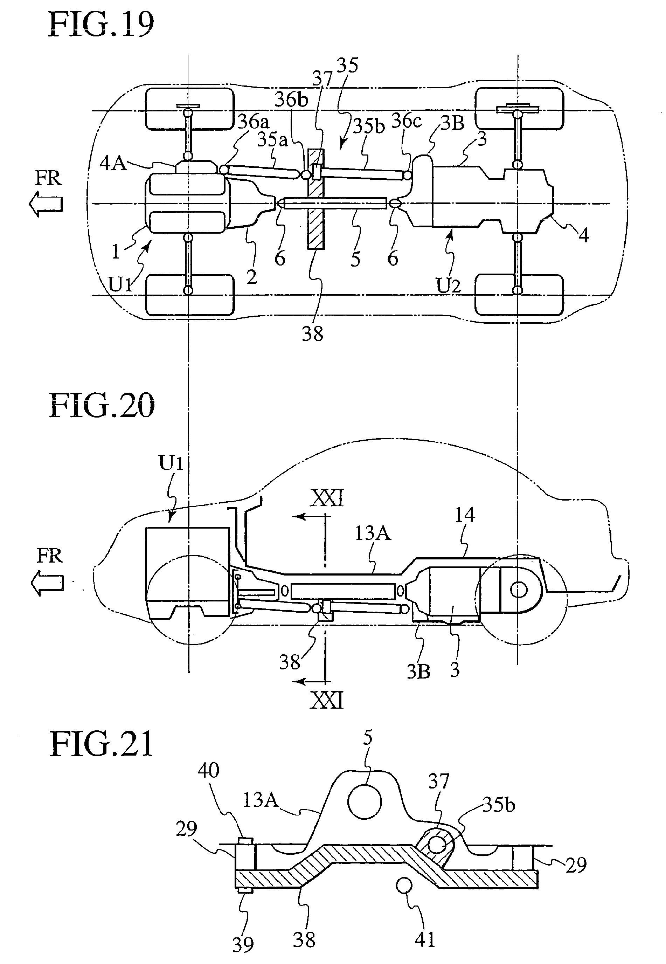

A vehicle drive system of a sixth embodiment according to the present invention is shown in Figs. 19 to 21. The sixth embodiment corresponds an exemplary structure in which the vehicle drive system of the first embodiment is applied to a 4WD (four wheel driven) vehicle especially of a rear drive type. Hereinafter, the same component parts as those of the first embodiment bear like reference numerals to omit redundant description.

Integrally assembled to the front portion of the transmission 3 of the rear drive unit U2 is a transfer 3B from which power output is taken out. The transfer 3B and a front differential 4A, from which power output is distributed to front axles, are connected to each other through a front propeller shaft 35.

The front propeller shaft 35 is divided into a front shaft 35a and a rear shaft 35b. The front shaft 35a has a front end connected to the front differential 4A through a joint 36a. The rear shaft 35b has a rear end connected to the transfer 3B through a joint 36c. The front shaft 35a and the rear shaft 35b are connected to one another through a center joint 36b.

With such a structure, a drive force of the engine 1, transmitted from the front drive unit U1 to the rear drive unit U2 through the propeller shaft 5, is taken out from the transfer 3B and, then, delivered to the front differential 4 to drive front wheels.

The front propeller shaft 35 is received in the floor tunnel 13A in the samemanner as the propeller shaft 5. The front propeller shaft 35 is resiliently supported by a center mount 37 in the vicinity of the center joint 36. The center mount 37 has a bearing, a housing in which the bearing is supported, and an elastic body intervening between the bearing and the housing.

The center mount 37 is supported on the floor tunnel stay 38 from a lower side thereof. The floor tunnel stay 38 straddles the tunnel reinforcing members 29 disposed along lower surfaces of both the side edges of the floor tunnel 13A. Both end portions of the floor tunnel stay 38 are fixedly fastened to respective lower surfaces of the tunnel reinforcing members 29 by bolts 39, extending through the respective tunnel reinforcing members 29, and nuts 40 secured to upper surfaces of the respective tunnel reinforcing members 29.

With the structure of the sixth embodiment, in addition to the same advantage, of improving the noise and vibration performance, as that of the first embodiment, a number of advantages of this embodiment become evident.

With this embodiment, the floor tunnel stay 38 straddles the lower opening of the floor tunnel 13A and is fixedly fastened to the tunnel reinforcing members 29 disposed along the lower surfaces of both the respective side edges of the floor tunnel 13A. This precludes the lower opening of the floor tunnel 13A from expanding in the lateral direction.

Further, the floor tunnel stay 38 is integral with the center mount 37, by which the front propeller shaft 35 is supported in the vicinity of the center joint 36b, making it possible to reduce the number of component parts with a resultant decrease in mass and cost. Also, improved space efficiency is provided.

With a transfer axle vehicle of a 4WD equipped with the rear drive unit U2 provided with the transfer 3B, the front propeller shaft 35 has a total length longer than that of a normal 4WD vehicle with the front drive unit in which the transfer is incorporated. However, with the structure of this embodiment, the front propeller shaft 35 is divided into the front shaft 35a and the rear shaft 35b. Accordingly, the strength and rigidity required for the respective shafts 35a, 35b in terms of guarantee of rotation and noise and vibration performance are lower than those of a structure in which no front propeller shaft 35 is divided. Consequently, it becomes possible for the respective shafts to have decreased thicknesses and cross sectional areas, enabling reduction in mass and cost.

Also, an exhaust pipe 41 may be disposed in opposition to the front propeller shaft 35 at a lower side of the floor tunnel stay 38 and supported and fixedly secured to the lower surface of the floor tunnel stay 38.

### Seventh Embodiment

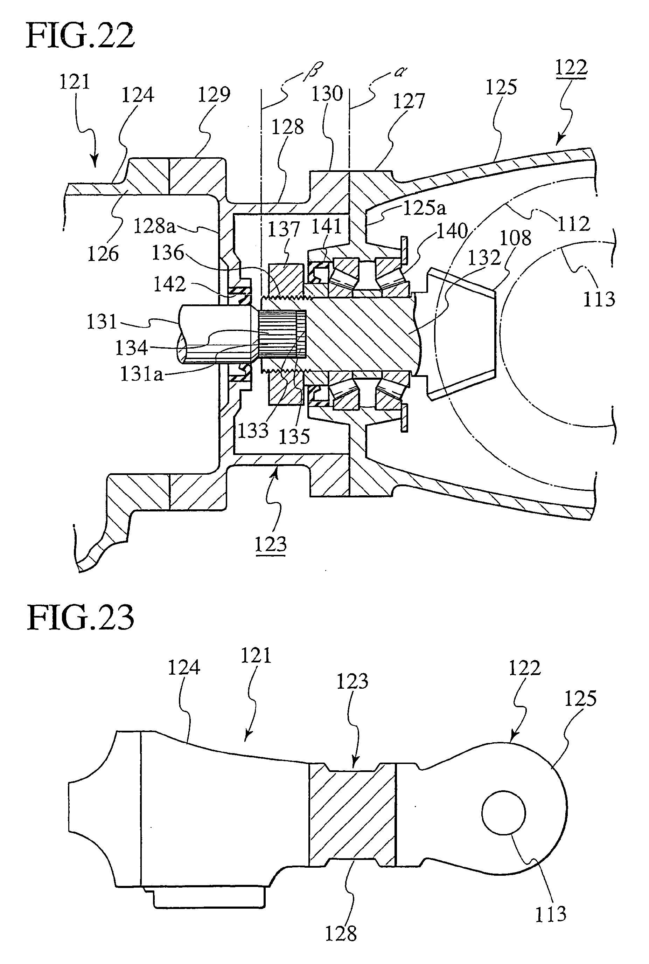

As shown in Figs. 22 and 23, a trans axle structure of a seventh embodiment according to the present invention has three component parts including a transmission 121, a differential 122 and a transmission/differential coupling adapter 123 disposed between the transmission 121 and the differential 122. These component parts are available to be divided into respective pieces.

A rear portion of a transmission case 124 forming an outer contour portion of the transmission 121 and a front end portion of a differential carrier 125 forming an outer contour portion of the differential 122 are formed with connecting flanges 126, 127, respectively.

Coupled between the flange 126 of the transmission case 124 and the flange 127 of the differential carrier 125 is an adapter case 128 that forms an outer contour portion of the transmission/differential coupling adapter 123.

The adapter case 128 has a hollow cylindrical structure open at both ends and is formed with joint flanges 129, 130.

The flange 129 is coupled to the flange 126 of the transmission case 124 by means of bolts that are not shown. The flange 1130 is coupled to the flange 127 of the differential carrier 125 by means of bolts that are not shown.

Further, the adapter case 128 has a front end side formed with a partition wall 128a by which a space inside the adapter case 128 is separate from a space inside the transmission case 121.

The adapter case 128 has a rear side that is open. Disposed in a front end portion of the differential carrier 125 is a partition wall 125 by which a space inside the adapter case 128 and a space inside the differential carrier are separate from one another.

The partition wall 125 carries a bearing 140.

A differential pinion shaft 132 is inserted to the bearing 140 from an area at the differential carrier 125. Integrally formed on a rear end of the differential pinion shaft 132 is a gear 108.

The differential pinion shaft 132 has a front end terminated at a position rearward of the partition wall 128a of the adapter case 128, i.e. , at a position inside the adapter case 128.

An oil seal 141 is disposed between the partition wall 125a of the differential carrier 125 and the differential pinion shaft 132 at a position forward of the bearing 140.

The output shaft 131 is inserted to the transmission 121. The output shaft 131 has a rear end extending through the partition wall 128a, disposed at a front side of the adapter case 128, to an area inside the adapter case 128.

Disposed in a central through-bore section of the partition wall 128a through which the output shaft 131 extends is an oil seal 142. Also, a gear 108 of the differential pinion shaft 132 meshes with a differential ring gear 112 that rotates with the differential case 113.

Thus, an internal space of the adapter case 128 is separate from internal spaces of the transmission case 124 and the differential carrier 125 by the oil seals 141, 142.

That is, the oil seals 141, 142, which seal various circumferential areas of the output shaft 131 and the differential pinion shaft 132, are disposed in the partition wall 128a of the transmission 121 and the partition wall 125a of the differential 122. This allows the adapter case 128 to be hollow and enables the transmission 121 and the differential 122 to be divided from one another with no leakage of oil.

Further, a rear end of the output shaft 131, which is located inside the adapter case 128, is formed with a small diameter portion 131a. On the other hand, a front end of the differential pinion shaft 132, which is located inside the adapter case 128, is formed with a bore 133.

Formed on an outer peripheral surface of the small diameter portion 131a and an inner peripheral surface of the bore 133 are spline teeth 134, 135, through which spline connection is provided between the output shaft 131 and the differential pinion shaft 132 to allow these component parts to be detachably coupled through the spline recessed 134, 135 to permit unitary rotation.

Further, the differential pinion shaft 132 has a front end portion, serving as a spline connecting portion, whose outer peripheral surface is formed with a threaded portion 136, to which preload fastening nut 137 of the bearing is screwed.

The preload fastening nut 137 is disposed in a case splitting position α between the transmission case 124 and differential carrier 125, i.e ., at the same position as a forward position of the flange 127 of the differential carrier 125 or at a position forward of (left side in Fig. 22) that forward position.

In the seventh embodiment, the fastening nut 137 is disposed on the same plane as a shaft splitting position β, i.e. , a frontal end position of the differential pinion shaft 132 or at a position rearward thereof.

With the transaxle structure of the seventh embodiment, under a condition where the transmission case 124 and the differential carrier 125 are split from one another, the fastening nut 137 is positioned outward (in front) of the differential carrier 125 at all times.

This allows the threaded portion 136 formed on the front end of the differential pinion shaft 132 is exposed to the outside under a condition where the transmission case 124, the differential carrier 125 and the adapter case 128. Accordingly, operational works, such as works for fastening and adjusting the fastening nut 137, can be easily carried out in an area outside the differential carrier 125.

Further, the fastening nut 137 is determined to assume the position on the same plane as the shaft splitting position β , i.e. , the frontal end position of the differential pinion shaft 132 or at the position rearward thereof.

Consequently, the spline connecting portion, wherein the output shaft 131 and the differential pinion shaft 132 are splined connected, overlaps the position in which the fastening nut 137 is fastened in an axial direction. This allows an axial lengthwise dimension to be shortened, providing a layout having a favorable space efficiency of the hollow space of the adapter case 128.

Thus, by providing the adapter case 128 as the member for coupling the transmission case 124 and the differential carrier 125 and locating the differential-preload fastening nut on the same plane or at the forward area with respect to the case splitting position α, it becomes easy to fasten and adjust the preload fastening nut.

Furthermore, by providing differential-preload fastening nut on the same plane or at the rearward area with respect to the shaft splitting position β, the fastening nut 137 can be reliably set to the splitting position under a condition where the output shaft 131 is not spline connected to the differential pinion shaft 132.

Moreover, the output shaft 131 of the transmission 121 and the differential pinion shaft 132 of the differential 122 are coupled to one another through spline connection, and the pre-load fastening nut 137 is disposed on the outer peripheral surface of the differential pinion shaft 132 at the spline connecting position. This allows a distance between the bearing 140 and the fastening nut 137 to be shortened, enabling preload to be applied in a stabilized fashion.

Besides, the oil seals 141, 142 are disposed in the partition wall 128a of the transmission 121 and the partition wall 125a of the differential 122 to seal the respective outer peripheral areas of the output shaft 131 and the differential pinion shaft 132, enabling the transmission 121 and the differential 122 to be split from one another. As a consequence, it becomes easy to make research and development work individually for the transmission 121 and the differential 122.

In addition, a variety of gear ratios and specifications can be easily combined, providing an ease of confirming causes of failures and replacing component parts.

Further, with the structure of the seventh embodiment, no need arises for the central portion (an area close proximity to a rotational center) of the gear 108 at the rear end of the differential pinion shaft 132 to be formed with a hollow portion. Accordingly, no distortion as a result of heat treatment is likely to occur, resulting in reduction in adverse affect on fastening work to provide an increase in setting precision of preload.

Furthermore, the front end of the differential pinion shaft 132 is spline connected to the output shaft 131 in the area rearward of the partition wall 128a of the adapter case 128. Formed on the outer circumferential periphery of the differential pinion shaft 132 at the position overlapping the spline connecting portion in the axial position is the threaded portion 136 that is screwed into the preload fastening nut 137 of the bearing.

No fastening nut 111 as shown in Fig. 28 is present, the differential case 113 can be expanded toward an area close proximity to the gear 108. Even when setting a given gap δ for preload adjustment in an area between these component parts, it becomes possible to increase a freedom in designing a size of the differential case 113 inside the differential carrier 125.

That is, this embodiment is able to easily meet requirements for increasing a size of the differential case 113 in view of a strength and durability.

### Eighth Embodiment

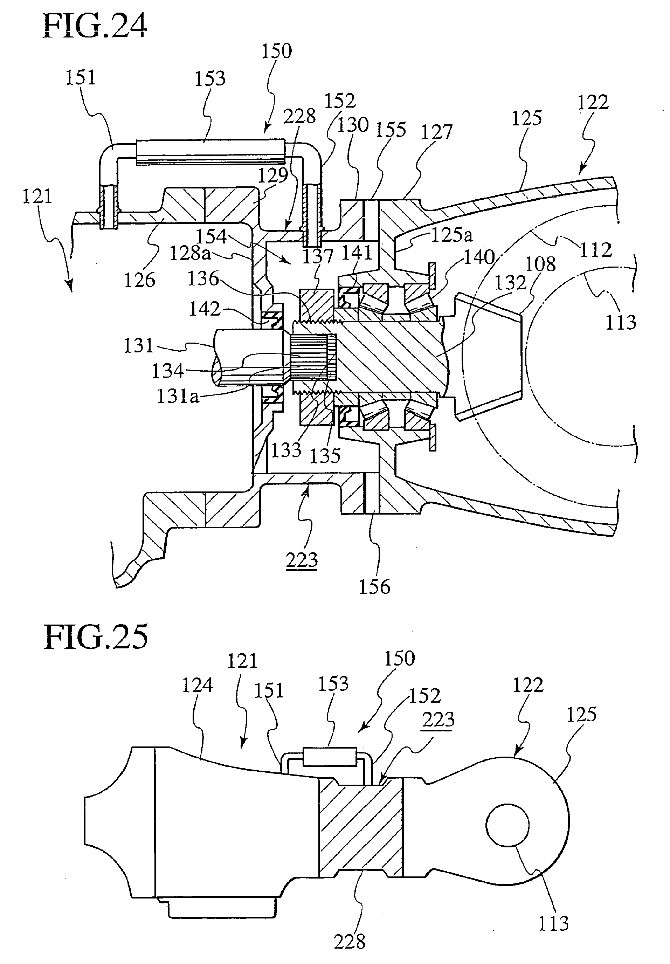

As shown in Figs. 24 and 25, a transaxle structure of an eighth embodiment is fundamentally identical to that of the seventh embodiment. The same component parts as those of the seventh embodiment shown in Figs. 22 and 23 bear like reference numerals in Figs. 24 and 25 to omit redundant description, and description is made of such a different point.

With the eighth embodiment, a rear end portion of the transmission case 124, forming the outer contour portion of the transmission 121, and a front end portion of the differential carrier 125 forming an outer contour portion of the differential 122 are formed with connecting flanges 126, 127, respectively, that are placed in position in face-to-face relationship.

Connected between the flange 126 of the transmission case 124 and the flange 127 of the differential carrier 125 is an adapter case 228 that forms an outer contour portion of a transmission/differential coupling adapter 223.

The adapter case 228 has a cylindrical configuration whose both end portions are opened. Formed on both end portions (front and rear portions) of the adapter case 228 in an axial direction thereof are the connecting flanges 129, 130. The flange 129 is coupled to the flange 126 of the transmission case 124 by means of bolts that are not shown. The flange 130 is coupled to the flange 127 of the differential carrier 125 by means of bolts that are not shown.

Formed on a front end of the adapter case 228 is the partition wall 128a, by which a space inside the adapter case 228 is separately defined from a space inside the transmission case 121. The rear end of the adapter case 228 is opened. the space inside the adapter case 228 and the space inside the differential carrier 125 are separately defined from one another by the partition wall 125a formed on the front end of the differential carrier 125.

The partition wall 125a carries therein the bearing 140. The differential pinion shaft 132 is inserted to the bearing 140 at the position closer to the differential carrier 125. The front end, which is inserted, of the differential pinion shaft 132 is located at a position rearward of the partition wall 128a of the adapter case 128,i.e., at a position inside the adapter case 128.

Further, disposed between the partition wall 125a of the differential carrier 125 and the differential pinion shaft 132 at the area forward of the bearing 140 is the oil seal 141.

On the other hand, the output shaft 131 is inserted to the transmission 121 and extends through the partition wall 128a of the front end of the adapter case 228 into an area inside the adapter case 228.

The oil seal 142 is disposed in the central through-bore portion of the partition wall 128a to which the output shaft 131 is inserted.

Thus, the interior of the adapter case 228 is separately defined from the internal spaces of the transmission case 124 and the differential carrier by the oil seals 141, 142.

That is, the oil seals 141, 142 are disposed in the partition wall 128a, closer to the transmission 125, of the adapter case 228 and the partition wall 125a of the differential 122, respectively, to seal the respective outer circumferential areas of the output shaft 131 and the differential pinion shaft 132. This allows the adapter case 228 to be hollow and allows the transmission 121 and the differential 122 to be split from one another with no leakage of oil.

The output shaft 131 has the rear end, located in the adapter case 228, which is formed with the small diameter portion 131a.

On the other hand, the differential pinion shaft 132 has the front end, located in the adapter case 228, which is formed with the bore 133.

Formed on the outer peripheral surface of the small diameter portion 131a and the inner peripheral surface of the bore 133 are spline teeth 134, 135, through which spline connection is provided between the output shaft 131 and the differential pinion shaft 132 to allow these component parts to be detachably coupled to one another through the spline recessed 134, 135 to permit unitary rotation.

Further, the differential pinion shaft 132 has the front end portion, serving as the spline connecting portion, whose outer peripheral surface is formed with the threaded portion 136, to which preload fastening nut 137 of the bearing is screwed.

Further, with the eighth embodiment, the interior of the transmission and the interior of the transmission/differential coupling adapter are held in fluid communication with one another through a breather hose 150.

The breather hose 150 includes a pair of breather connectors 151 , 152 and a breather hose body 153 interconnecting the breather connectors 151, 152.

The adapter case 228 has an upper wall formed with an aperture for releasing a breather chamber 154 to the atmosphere, i.e., an atmospheric release aperture 155.

The adapter case 228 has a lowerwall formed with an aperture for draining water from the breather chamber 154, i . e . , a water drainage aperture156. Thus, the interior of the adapter case 228 forms the breather chamber 154.

With the transaxle structure of the eighth embodiment, in addition to the advantages of the transaxle structure of the seventh embodiment, a large number of advantages become evident as described below.

With the eighth embodiment, the adapter case 228 is provided as the member for interconnecting the transmission case 124 and the differential carrier 125. This allows the transmission 121 and the differential 122 to be fully split from one another between which an air (atmospheric) layer can be formed as the breather chamber 154.

Further, the transmission and the differential can be connected to one another in the splitting capability due to the transmission/differentialcoupling adapterintervening between the transmission and the differential. The interior of the transmission and the interior of the transmission/differential coupling adapter are held in fluid communication through the breather hose. In addition, the transmission/differential coupling adapter has the interior that serves as the breather chamber.

Forming the atmospheric release aperture 155 in the upper wall of the adapter case 228 and forming the water drainage aperture 156 in the lower wall of the adapter case 228 enables the breather chamber to be reliably equalized in pressure with the atmosphere.

With the eighth embodiment set forth above, the breather hose 150 can be shortened and take a structure that is low in cost and light in weight. Also, no breather is closed to provide an increased reliability in breather function unlike cases where one-way valve is provided.

If attempt is made to provide a waterproof wall in the breather chamber 154, an increased reliability can be easily obtained.

Other structures and advantages are identical to or equivalent to those of the seventh embodiment and, therefore, description of these matters are herein omitted.

The preferred embodiments described herein are illustrative and not restrictive, and the invention may be practiced or embodied in other ways without departing from the spirit or essential character thereof. The scope of the invention being indicated by the claims, and all variations which come within the meaning of claims are intended to be embraced herein.

The present disclosure relates to subject matters contained in Japanese Patent Application No. 2003-326474, filed on September 18, 2003, Japanese Patent Application No. 2003-381552, filed on November 11, 2003, Japanese Patent Application No. 2004-008835, filed on January 16, 2004, and Japanese Patent Application No. 2004-082953, filed on March 22, 2004, the disclosures of which are expressly incorporated herein by reference in their entirety.

## Claims

1. A vehicle drive system comprising:
a front drive unit (U1) in a front part of a vehicle, which has an engine (1) and a torque converter (2) integrally assembled to one another;
a rear drive unit (U2) in a rear part of the vehicle, which has a transmission (3) and a differential (4) integrally assembled to one another; and
a drive shaft (5) connecting the torque converter (2) of the front drive unit (U1) and the transmission (3) of the rear drive unit (U2); wherein:
the drive shaft (5) is configured to be elastically twistable for damping vibration transmission between the front and rear drive units (U1, U2);
the transmission (3) of the rear drive unit (U2) is assembled to a front end of the differential (4), and
the rear drive unit (U2) is supported, at a rear end of the differential (4) thereof, by a rear end portion of a rear sub frame (16) which is joined to a vehicle floor, and at a front portion of the transmission (3) thereof, by a tunnel portion of a rear seat cross member (15), which is formed to be contiguous with a floor tunnel (13A), through a mount member (18).

2. The vehicle drive system according to claim 1, wherein
the mount member (18) comprises:
a base member (18A) having a pair of front and rear walls (18Aa, 18Ab) which close front and rear openings of the tunnel portion (15C) of the rear seat cross member (15), respectively; and
a vibration-proof bush (22) extending through the front and real walls (18Aa, 18Ab), wherein
the front portion of the transmission (3) is inserted into the vibration-proof bush (22) to allow the mount member (18) and the transmission (3) to be sub-assembled, and
the sub-assembled mount member (18) and transmission (3) is attached to the rear seat cross member (15) by inserting the base member (18A) of the mount member (18) from a lower side of the tunnel portion (15C) of the rear seat cross member (15) .

3. The vehicle drive system according to claim 2, wherein
the base member (18A) has a bottom wall (18Ac) connecting the front and rear walls (18Aa, 18Ab) thereof, and
the bottom wall (18Ac) straddles over a bottom opening of the tunnel portion (15C), overlaps a bottom face of the rear seat cross member (15), and is fastened thereto.

4. The vehicle drive system according to claim 2, wherein
the front wall of the base member (18A) is formed at left and right side edges thereof with flanges (18Ad) which overlap left and right side walls of the floor tunnel (13A) and are fastened thereto, and
the rear wall (18Ab) of the base member (18A) straddles over the rear opening of the tunnel portion (15C), overlaps a rear wall (18Ab) of the rear seat cross member (15), and is fastened thereto.

5. The vehicle drive system according to claim 4, wherein
the flanges (18Ad) of the front wall of the base member (18A) and the rear wall (18Ab) thereof are fastened to the rear seat cross member (15) from inside a vehicle compartment (11) .

6. The vehicle drive system according to claim 1, wherein
the mount member (18) includes a stay (18B) having a vibration-proof member (22A) to support the front portion of the transmission (3), and
the stay (18B) straddles over a bottom opening of the tunnel portion (15C) and is fastened to the rear seat cross member (15) .

7. The vehicle drive system according to claim 1, wherein
the mount member (18) includes a transmission stay (18C) that straddles over a bottom opening of the tunnel portion (15C), and
a reinforcing stay (31) is provided for connecting the transmission stay (18C) to a tunnel reinforcing member (29) provided along the floor tunnel (13A).

8. The vehicle drive system according to claim 7, wherein
the reinforcing stay (31) is formed at rear part thereof with an extension (31A) which extends rearward and outward in the vehicle widthwise direction from a point where the reinforcing stay (31) is connected to the transmission stay (18C), and
the rear end of the extension (31A) is joined to the vehicle floor (13).

9. The vehicle drive system according to claim 8, wherein
the rear end of the reinforcing stay (31) is joined to the vehicle floor (13) together with front portion of the rear sub frame (16).

10. The vehicle drive system according to claim 1, wherein
the torque converter (2) of the front drive unit (U1) and the transmission (3) of the rear drive unit (U2) are respectively provided with oil chambers (2A, 3A) which are communicated through a conduit (7), and
an oil pump (8) is provided on either one of the torque converter (2) and the transmission (3).

11. The vehicle drive system according to claim 10, wherein
the conduit (7) is arranged in a floor tunnel (13A) along the drive shaft (5).

12. The vehicle drive system according to claim 1, wherein
the drive shaft (5) is formed of either one of a carbon fiber reinforced material or a glass fiber reinforced material.

13. The vehicle drive system according to claim 1, further comprising:
a transfer (3B) incorporated in the rear drive unit (U2) ;
a front differential (4A) distributing torque to front wheels of the vehicle; and
a front drive shaft (35) connecting the transfer (3B) and the front differential (4A).

14. The vehicle drive system according to claim 13, further comprising:
a floor tunnel stay (38) straddling over a bottom opening of the floor tunnel (13A), wherein
the front drive shaft (35) is divided into two shafts (35a, 35b) that are linked to one another and supported by the floor tunnel stay (38).

15. The vehicle drive system according to claim 1, wherein
an output shaft (131) of the transmission (3) of the rear drive unit (U2) and a differential pinion shaft (132) of the differential (4) thereof are detachably connected at a coupling portion to be integrally rotatable, and
the differential pinion shaft (132) carries, on an outer circumferential thereof at the coupling portion, a nut (137) for preloading a bearing (140) of the differential (4).

16. The vehicle drive system according to claim 15, further comprising:
a first partition wall (128a) through which the output shaft (131) extends from the coupling portion toward the transmission (3); and
a second partition wall (125a) through which the differentialpinionshaft(132) extends from the coupling portion toward the differential (4), wherein
the first partition wall (128a) is provided with an oil seal (142) which seals a gap between the first partition wall (128a) and the output shaft (131),
the second partition wall (125a) is provided with another oil seal (141) which seals a gap between the second partition wall (125a) and the differential pinion shaft (132), and
the transmission (3) and the differential (4) are detachably connected to each other.

17. The vehicle drive system according to claim 15, further comprising:
an adapter (223) intervening between the transmission (3) and the differential (4) to detachably connect the same; and
a breather hose (150) which communicates an interior of the transmission (3) and an interior of the adapter (223), wherein
the adapter (223) has an upper wall formed with an aperture to vent the interior of the adapter (223) to the atmosphere, and
the adapter (223) has a lower wall formed with an aperture for draining water from the interior of the adapter (223).
